# FASCICULE DE BREVET EUROPEEN

(11) **EP 3 522 020 B1**
(45) Date de publication et mention de la délivrance du brevet: **29.03.2023**
(21) Numéro de dépôt: 19155136.5
(22) Date de dépôt: 01.02.2019
(51) Int. Cl.: G06F 11/10

(54) **GESTION D'UNE MÉMOIRE NON VOLATILE**
MANAGEMENT EINES NICHT-FLÜCHTIGEN SPEICHERS
MANAGEMENT OF A NON-VOLATILE MEMORY

(30) Priorité: 05.02.2018 FR 1850927
(43) Date de publication de la demande: 07.08.2019
(73) Titulaire: PROTON WORLD INTERNATIONAL N.V., 1831 Diegem (BE)
(72) Inventeur: MODAVE, Jean-Louis, 1340 OTTIGNIES (BE); DOCQUIER, Guillaume, 4300 WAREMME (BE)
(74) Mandataire: Cabinet Beaumont

(56) Documents cités:
- US-A1- 2011 271 164
- US-A1- 2012 072 798
- US-A1- 2012 317 463
- US-A1- 2014 201 601

## Description

### Domaine

La présente description concerne de façon générale les circuits et systèmes électroniques et, plus particulièrement, les circuits et systèmes exploitant une mémoire non volatile réinscriptible.

### Exposé de l'art antérieur

Le stockage d'informations (données et programmes) dans une mémoire non volatile, par exemple une mémoire flash, présente diverses contraintes liées à la granularité des opérations réalisées (écriture, lecture, effacement).

Par ailleurs, on doit s'assurer que le stockage soit non seulement correct (qu'il n'y ait pas eu d'erreur lors du stockage), mais également qu'il soit fiable dans le temps et ne dérive pas. Il faut donc associer des mécanismes de correction d'erreur au stockage dans la mémoire.

Dans certaines applications, on souhaite s'assurer que les transactions réalisées et stockées respectent un critère d'atomicité. L'atomicité d'une transaction correspond à s'assurer que des données stockées en mémoire présentent bien un état exploitable. Cela revient à s'assurer que des données en mémoire non volatile présentent soit l'état avant la transaction soit l'état après la transaction concernée mais qu'elles ne présentent pas un état intermédiaire. Les mécanismes de correction d'erreur basés sur des codes de correction d'erreur doivent alors respecter le critère d'atomicité.

Le document US 2012/0072798 décrit un dispositif semiconducteur qui comporte une mémoire flash NAND, une unité de correction d'erreur et une table.

Le document US 2012/0317463 décrit un contrôleur mémoire.

### Résumé

Un mode de réalisation pallie tout ou partie des inconvénients des mécanismes de stockage dans une mémoire non volatile réinscriptible.

Un mode de réalisation prévoit un mécanisme améliorant la fiabilité des données stockées en termes de correction d'erreur.

Un mode de réalisation prévoit un procédé de gestion d'une mémoire non volatile tel que défini dans les revendications annexées

Un mode de réalisation prévoit un contrôleur de mémoire non volatile.

Un mode de réalisation prévoit une mémoire non volatile.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de circuit électronique du type auquel s'appliquent les modes de réalisation décrits ;
la figure 2 représente, de façon très schématique et sous forme de blocs, une mémoire non volatile réinscriptible du type auquel s'appliquent les modes de réalisation décrits ; et
la figure 3 représente un mode de réalisation d'un traitement de détection et correction d'erreur.

### Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, les applications d'une mémoire non volatile avec code de détection et de correction d'erreur n'ont pas été détaillées, les modes de réalisation décrits étant compatibles avec les applications usuelles.

Les exemples décrits non couverts par les revendications annexées ne relèvent pas de l'invention et ne sont présents qu'à titre illustratif".

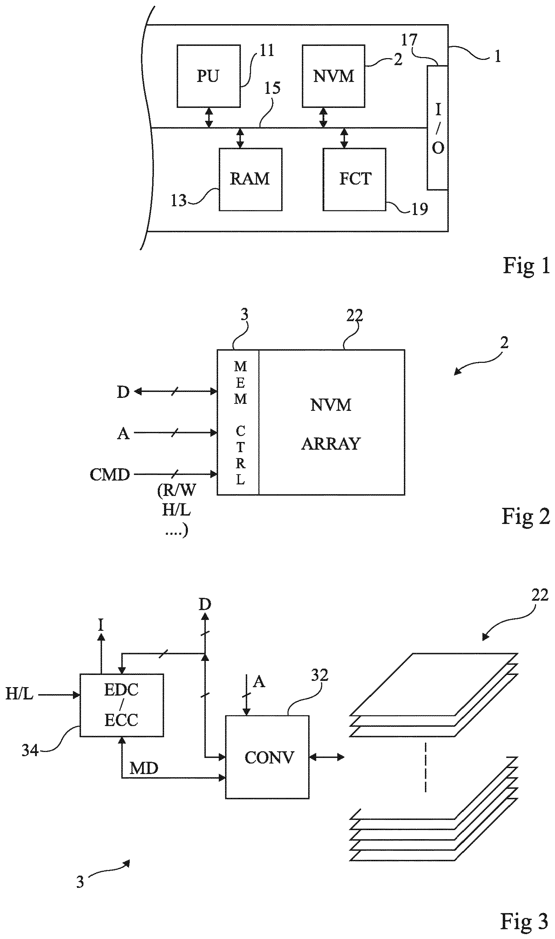

La figure 1 représente, de façon très schématique et sous forme de blocs, un exemple de circuit électronique du type auquel s'appliquent les modes de réalisation décrits.

Le circuit 1 comporte :
une unité de traitement 11 (PU), par exemple une machine d'états, un microprocesseur, un circuit logique programmable, etc. ;
une ou plusieurs zones 13 (RAM) de stockage volatile, par exemple de type mémoire RAM ou registres, pour stocker temporairement des informations (instructions, adresses, données) pendant les traitements ;
une ou plusieurs zones de stockage non volatile (NVM), par exemple une mémoire 2 de type flash pour stocker des informations de façon durable et en particulier quand le circuit n'est pas alimenté ;
un ou plusieurs bus 15 de données, d'adresses et/ou de commandes entre les différents éléments internes au circuit 1 ; et
une interface d'entrée-sortie 17 (I/O) de communication, par exemple de type bus série, avec l'extérieur du circuit 1.

Par ailleurs, le circuit 1 peut intégrer d'autres fonctions, symbolisées par un bloc 19 (FCT), selon l'application, par exemple, un crypto-processeur, d'autres interfaces comme par exemple de communication sans contact en champ proche (Near Field Communication - NFC), d'autres mémoires, etc.

La figure 2 représente, de façon très schématique et sous forme de blocs, une mémoire non volatile 2 réinscriptible du type auquel s'appliquent les modes de réalisation décrits.

La mémoire 2 comporte principalement un réseau 22 (NVM ARRAY) de cellules mémoire de stockage non volatile, dans lequel le stockage est organisé en pages et mots et un contrôleur mémoire 3 (MEM CTRL) dont le rôle est de gérer les lectures et écritures des informations D (données et programme) dans le plan mémoire en fonction d'adresses A fournies par l'extérieur (typiquement par l'unité de traitement 11, figure 1). En particulier, le contrôleur 3 convertit des adresses logiques fournies par les applications souhaitant accéder à la mémoire en adresses physiques du plan mémoire 22. La mémoire communique avec l'extérieur, via le contrôleur mémoire 3 qui reçoit, non seulement les adresses logiques, mais également des commandes (CMD) parmi lesquelles une instruction R/W de lecture ou d'écriture selon la tâche à exécuter.

Dans les applications visées par la présente description, le contrôleur mémoire 3 a également la fonction de détecter et si possible de corriger d'éventuelles erreurs dans les informations stockées. Cette fonction est, pour des raisons d'espace mémoire, configurée en fonction de la nature des informations stockées dans la mémoire. Ainsi, parmi les bits de commande reçus par la mémoire, un bit H/L conditionne le code de détection et de correction d'erreur utilisé. Plus précisément, ce bit sélectionne le niveau d'intégrité des informations stockées.

Une instruction d'écriture provenant, par exemple, de l'unité de traitement est accompagnée d'un indicateur du niveau d'intégrité (basse (L) ou haute (H)) souhaité. La notion basse ou haute est relative et se réfère à l'autre niveau d'intégrité. Le niveau bas correspond à un niveau relativement faible d'intégrité par rapport au niveau haut qui est d'un niveau relativement fort.

Dans les mémoires actuelles, la mémoire est découpée en deux zones respectivement de basse intégrité et de haute intégrité. Le niveau d'intégrité conditionne la taille du code de détection et de correction (EDC/ECC - Error Détection Code / Error Correction Code). Le contrôleur mémoire sélectionne alors le niveau d'intégrité en fonction de l'adresse de stockage par rapport à la limite entre les deux zones.

Le choix du code correcteur d'erreur dépend de l'application et, en particulier, de la taille du mot physique de la mémoire non volatile, du nombre de bits souhaité pour les mots logiques. Plus particulièrement, dans les applications visées par la présente description, le code de détection/correction (EDC/ECC) d'erreur utilisé est de type linéaire qui conduit à ajouter 7 bits de code EDC/EDC à chaque mot de 32 bits et à ajouter 14 bits de code EDC/ECC à chaque mot de 64 bits.

Le code des mots de 64 bits correspond à une haute intégrité dans la mesure où la longueur du code 14 bits sur 64 bits permet de détecter avec une meilleure probabilité des erreurs de 2 bits et plus qu'avec un code de 7 bits sur 32 bits.

En pratique, la zone mémoire de haute intégrité est limitée au stockage des programmes et les données proprement dites ainsi que les métadonnées (drapeaux, etc.) sont stockées dans la zone de basse intégrité. En effet, le fait que les adresses affectées au stockage en haute intégrité et en basse intégrité soient figées rend inefficace en pratique de stocker les données en haute intégrité, car il faudrait alors coder toutes ces données et métadonnées à stocker en haute intégrité sur 64 bits. Or, une métadonnée peut être un simple drapeau sur 1 bit et le stocker dans la zone de granularité de 64 bits n'est pas souhaitable. Toutefois, pour les données qui sont généralement des mots de 32 bits et qui sont rarement isolées (souvent plusieurs mots de données de 32 bits peuvent être stockés en même temps), cela améliorerait la fiabilité des données de pouvoir les stocker en haute intégrité.

Par ailleurs, dans une mémoire organisée par page et, en particulier dans une mémoire de type flash où l'écriture et la lecture s'effectuent par octets mais où l'effacement s'effectue obligatoirement par page entière (la page est définie comme correspondant à la granularité d'effacement de la mémoire), on souhaite stocker d'une part le code (moins fréquemment mis à jour que les données) dans des pages différentes que les pages dans lesquelles sont stockées les données et les métadonnées qui sont plus fréquemment modifiées. Il est donc préférable de conserver la distinction entre code d'une part et données/métadonnées d'autre part en termes de pages de stockage. En particulier, cela simplifie la gestion de l'atomicité dans une telle mémoire.

Ainsi, on prévoit de rendre versatile la sélection entre haute intégrité et basse intégrité sur tout le plan mémoire. Ainsi, lors de l'écriture d'une information en mémoire, l'application (le programme exécuté par l'unité de traitement) sélectionne le niveau d'intégrité souhaité en positionnant le drapeau H/L dans un état ou un autre.

Cela permet de dissocier, parmi les informations qui ne font pas partie du programme et qui sont habituellement stockées en basse intégrité, les données des métadonnées, et de stocker ainsi les données en haute intégrité sans que cela n'oblige à y stocker également les métadonnées.

On prévoit également que les deux codes soient de longueurs différentes, c'est-à-dire comportent des nombres de bits différents.

La figure 3 représente un mode de réalisation d'un traitement de détection et correction d'erreur.

La figure représente, de façon schématique et partielle une vue plus détaillée de certaines parties du contrôleur mémoire 3 de la mémoire 2 de la figure 2.

Le plan mémoire 22 est généralement organisé en pages dans lesquelles les informations sont stockées par mot d'au moins trente-deux bits. Selon les modes de réalisation décrits, le choix entre des mots de 32 et de 64 bits dépend du niveau d'intégrité souhaité.

Le contrôleur mémoire 3 comporte, entre autres, un convertisseur d'adresses 32 (CONV) dont le rôle est de convertir des adresses logiques A fournies par l'extérieur en adresses physiques dans le plan mémoire et de concaténer, en écriture, les informations stockées au code de détection et correction d'erreur et de les dissocier en lecture. Le contrôleur 3 comporte également un circuit 34 (EDC/ECC) ou processeur de calcul du code EDC/ECC de détection et de correction d'erreur. Le bit de contrôle de parité est calculé par le circuit 34 ou par le convertisseur 32.

En écriture, les informations à stocker et les adresses correspondantes proviennent de l'extérieur. L'instruction d'écriture est associée, de préférence précédée, d'une instruction de mise à jour d'un registre du contrôleur 3 stockant l'état du bit H/L de sélection du niveau d'intégrité. Les informations D à stocker sont non seulement envoyées au convertisseur 32 mais également au circuit 34. Le circuit 34 calcule, en fonction de l'état du bit H/L, le code EDC/ECC sur 7 ou sur 14 bits et fournit le code calculé au convertisseur 32 afin qu'il soit stocké en tant que métadonnées MD du mot correspondant.

En lecture, les informations et le code EDC/ECC correspondant sont extraits du plan mémoire 22. Le circuit 34 vérifie l'intégrité des informations à partir du code détecteur et correcteur d'erreur MD. Le circuit 34 fournit, avec les informations D, un indicateur de fiabilité I des informations fournies. Selon qu'il y a ou non des erreurs et selon qu'elles sont ou non réparables avec le code associé, l'indicateur I fournit un état indiquant que les données fournies sont fiables ou non.

En pratique, on conserve un stockage des programmes avec une haute intégrité. En particulier, les instructions d'un programme sont généralement exécutées majoritairement successivement et il n'est alors pas gênant de prévoir de grouper les mots par deux pour effectuer un codage sur des mots de 64 bits.

Pour ce qui est des données proprement dites (les variables manipulées par les programmes), il est désormais également possible de les stocker en haute intégrité sans nuire à un stockage en basse intégrité de métadonnées telles que des drapeaux, des indicateurs d'états, etc. qui restent stockées en haute intégrité.

De préférence, les données et les métadonnées restent cependant stockées dans les mêmes pages, c'est-à-dire que l'on mélange basse et haute intégrité dans une même page. Un avantage est que cela préserve la granularité d'effacement par page avec des données et métadonnées dans certaines pages et le code dans d'autres pages, tout en conservant une facilité de gestion d'atomicité avec les données et métadonnées mélangées dans les mêmes pages.

La mise en oeuvre des modes de réalisation décrits ne requiert aucune modification des mémoires usuelles et de leurs contrôleurs. On tire ici profit du fait que les contrôleurs mémoire reçoivent déjà un drapeau fourni par le processeur pour conditionner le niveau d'intégrité. Il suffit donc de modifier le programme de stockage dans la mémoire afin de conditionner le changement de niveau d'intégrité à la volée au fur et à mesure du déroulement du programme en fonction de la nature des données à stocker.

Un avantage des modes de réalisation décrits est qu'ils améliorent la gestion des erreurs dans une mémoire non volatile, de préférence une mémoire flash.

Un avantage des modes de réalisation décrits est qu'ils ne nécessitent aucune modification des mémoires existantes et de leurs contrôleurs mémoire.

Un avantage des modes de réalisation décrits est qu'ils sont compatibles avec les mécanismes d'atomicité usuels. En effet, leur mise en oeuvre n'intervient pas sur les mécanismes d'atomicité.

Un avantage des modes de réalisation décrits est qu'ils permettent de sélectionner un code EDC/ECC différent selon la nature des données. Ainsi, lors du stockage de mots de données de 32 bits, on peut choisir que certaines soient stockées en basse intégrité et que d'autres le soient en haute intégrité (par exemple, pour des données plus sensibles que l'on souhaite plus fiables).

Un avantage induit par les modes de réalisation décrits est que leur mise en oeuvre améliore la sécurité des données stockées contre des tentatives de piratage. En effet, les données ne sont désormais plus cantonnées dans les pages affectées à la zone de basse intégrité mais sont mélangées dans la zone de haute intégrité. Par conséquent, il devient plus difficile pour un attaquant de les isoler.

Bien que l'on ait fait référence à des codes EDC/ECC particuliers, on pourra prévoir tous codes de détection et de correction d'erreur adaptés, en prévoyant un code procurant une intégrité plus forte (en termes de capacité de correction du nombre de bits erronés) par rapport à un code d'intégrité relativement plus faible.

Divers modes de réalisation ont été décrits. Diverses variantes et modifications entrant dans le champ des revendications apparaîtront à l'homme de l'art. Par ailleurs, la mise en oeuvre pratique des modes de réalisation qui ont été décrits est à la portée de l'homme du métier à partir des indications fonctionnelles données ci-dessus et en utilisant des circuits en eux-mêmes usuels. Notamment, l'organisation de l'adressage de la mémoire et la génération des signaux adaptés à sa commande et à cet adressage font appel à des techniques en elles-mêmes usuelles.

## Revendications

1. Procédé de gestion d'une mémoire non volatile (2), dans lequel les informations (D) stockées peuvent être associées à un code de détection et de correction d'erreur choisi parmi deux codes, la sélection (H/L) du code conditionnant la longueur du mot stocké dans la mémoire et étant effectuée, lors de l'écriture, par le programme déclenchant l'écriture, les deux codes ayant des nombres de bits différents et la mémoire étant organisée en pages correspondant à la granularité d'effacement,
**caractérisé en ce qu'**une même page contient des informations associées à chacun des deux codes (H/L) .

2. Procédé selon la revendication 1, dans lequel la sélection (H/L) du code est effectuée à chaque écriture d'une information (D) dans la mémoire (2).

3. Procédé selon la revendication 1 ou 2, dans lequel un premier code comporte quatorze bits et est associé à un mot de soixante-quatre bits et un deuxième code comporte sept bits et est associé à un mot de trente-deux bits.

4. Procédé selon la revendication 3, dans lequel des données (D) sur trente-deux bits, manipulées par des instructions d'un programme, sont stockées avec le premier code.

5. Procédé selon la revendication 3 ou 4, dans lequel des métadonnées manipulées par un programme sont stockées avec le deuxième code.

6. Procédé selon l'une quelconque des revendications 1 à 5, dans lequel la position dans la mémoire (2) des informations associées aux codes de détection et de correction d'erreur est indépendante du code sélectionné.

7. Contrôleur (3) de mémoire non volatile (2), adapté à la mise en oeuvre du procédé selon l'une quelconque des revendications précédentes.

8. Mémoire non volatile (2) comportant un contrôleur (3) selon la revendication 7.

## Patentansprüche

1. Verfahren zum Managen eines nichtflüchtigen Speichers (2), wobei die gespeicherte Information (D) mit einem Fehlererkennungs- und -korrekturcode assoziiert werden kann, der aus zwei Codes ausgewählten wird, wobei die Codeauswahl (H/L) die Länge des im Speicher gespeicherten Wortes Konditioniert und durchgeführt wird, während des Schreibens, durch das das Schreiben auslösende Programm, wobei die beiden Codes eine unterschiedliche Anzahl von Bits aufweisen und der Speicher in Seiten organisiert ist, die der Löschgranularität entsprechen, **dadurch gekennzeichnet, dass** eine gleiche Seite Information enthält, die mit jedem der beiden Codes (H/L) assoziiert ist.

2. Verfahren nach Anspruch 1, wobei die Auswahl (H/L) des Codes jedes Mal durchgeführt wird, wenn Informationen (D) in den Speicher (2) geschrieben werden.

3. Verfahren nach Anspruch 1 oder 2, wobei ein erster Code vierzehn Bits aufweist und einem Vierundsechzig-Bit-Wort zugeordnet ist und ein zweiter Code sieben Bits aufweist und einem Zweiunddreißig-Bit-Wort zugeordnet ist.

4. Verfahren nach Anspruch 3, bei dem Daten (D) über zweiunddreißig Bit, die durch Anweisungen eines Programms manipuliert werden, mit dem ersten Code gespeichert werden.

5. Verfahren nach Anspruch 3 oder 4, wobei durch ein Programm manipulierte Metadaten mit dem zweiten Code gespeichert werden.

6. Verfahren nach einem der Ansprüche 1 bis 5, wobei die Position der den Fehlererkennungs- und -korrekturcodes zugeordneten Informationen im Speicher (2) unabhängig von dem ausgewählten Code ist.

7. Steuergerät (3) eines nichtflüchtigen Speichers (2), das in der Lage ist, das Verfahren nach einem der vorhergehenden Ansprüche durchzuführen.

8. Nichtflüchtiger Speicher (2) der die Steuerung (3) nach Anspruch 7 aufweist.

## Claims

1. A method of managing a non-volatile memory (2), wherein the stored information (D) may be associated with an error detection and correction code selected from among two codes, the code selection (H/L) conditioning the length of the word stored in the memory and being performed, during the writing, by the program triggering the writing, both codes having different numbers of bits and the memory being organized in pages corresponding to the erase granularity, **characterized in that** a same page contains information associated with each of the two codes (H/L).

2. The method of claim 1, wherein the selection (H/L) of the code is performed each time information (D) is written into the memory (2).

3. The method of claim 1 or 2, wherein a first code comprises fourteen bits and is associated with a sixty-four-bit word and a second code comprises seven bits and is associated with a thirty-two-bit word.

4. The method of claim 3, wherein data (D) over thirty-two bits, manipulated by instructions of a program, are stored with the first code.

5. The method of claim 3 or 4, wherein metadata manipulated by a program are stored with the second code.

6. The method of any of claims 1 to 5, wherein the position in the memory (2) of the information associated with the error detection and correction codes is independent from the selected code.

7. A controller (3) of a non-volatile memory (2), capable of implementing the method of any of the foregoing claims.

8. A non-volatile memory (2) comprising the controller (3) of claim 7.
